# EUROPEAN PATENT APPLICATION

(11) **EP 1 164 738 A2**
(43) Date of publication of application: **19.12.2001**
(21) Application number: 01113579.5
(22) Date of filing: 13.06.2001
(51) Int. Cl.: H04J 14/02

(54) **Wavelength division multiplex transmission system**

(30) Priority: 14.06.2000 JP 2000177713
(71) Applicant: NEC CORPORATION, Tokyo (JP)
(72) Inventor: Yoshida, Takehiro, Minato-ku, Tokyo (JP)
(74) Representative: VOSSIUS & PARTNER

(57) **Abstract**

A wavelength division multiplex transmission system includes N/2 (N is the maximum number of wavelengths to be used) CW light generating sections, N/2 switching circuit sections, and a wavelength multiplexing section. Each CW light generating section generates continuous wave light having the same wavelength as one of input even- and odd-numbered wavelengths used as operating wavelengths and outputs continuous wave light having a level twice as high as an input level of a light signal having an operating wavelength. Each switching circuit section selects one of an input wavelength and continuous wave light output from the corresponding CW light generating section. The wavelength multiplexing section outputs the other light signal of input light signals having even- and odd-numbered wavelengths and a light signal having different wavelength which is output from the switching circuit section upon wavelength multiplexing.

## Description

The present invention relates to a wavelength division multiplex transmission system and, more particularly, to the addition of operating wavelengths in a wavelength division multiplex transmission system for transmitting N light signals having different wavelengths by wavelength division multiplexing.

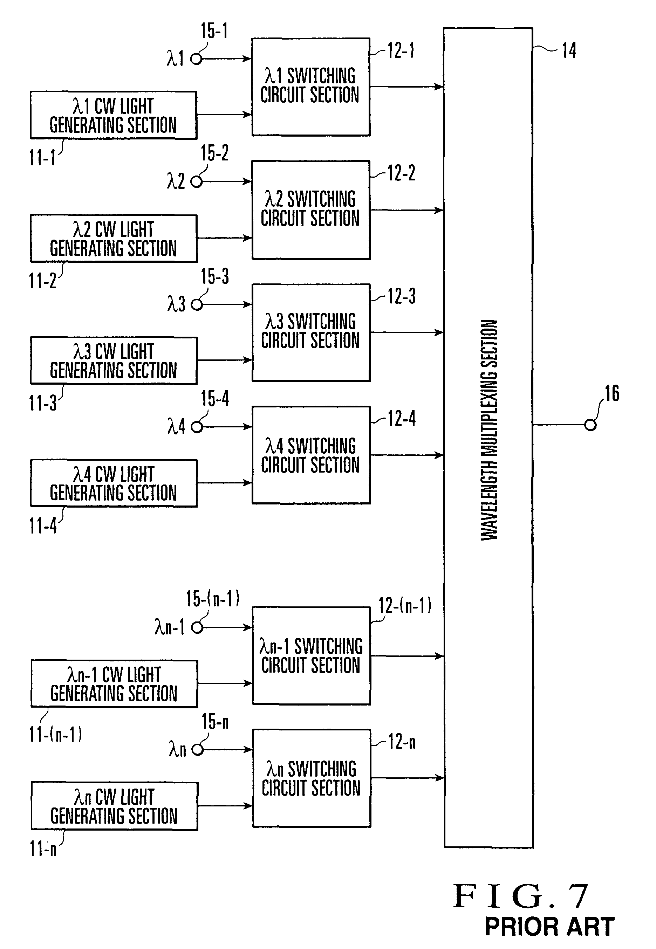

As shown in Fig. 7, a conventional wavelength division multiplex transmission system of this type used for the addition of operating wavelengths includes n λn CW (Continuos Wave) light generating sections 11-1 to 11-n serving as dummy light generating sections, n λn switching circuit sections 12-1 to 12-n, and a wavelength multiplexing section 14.

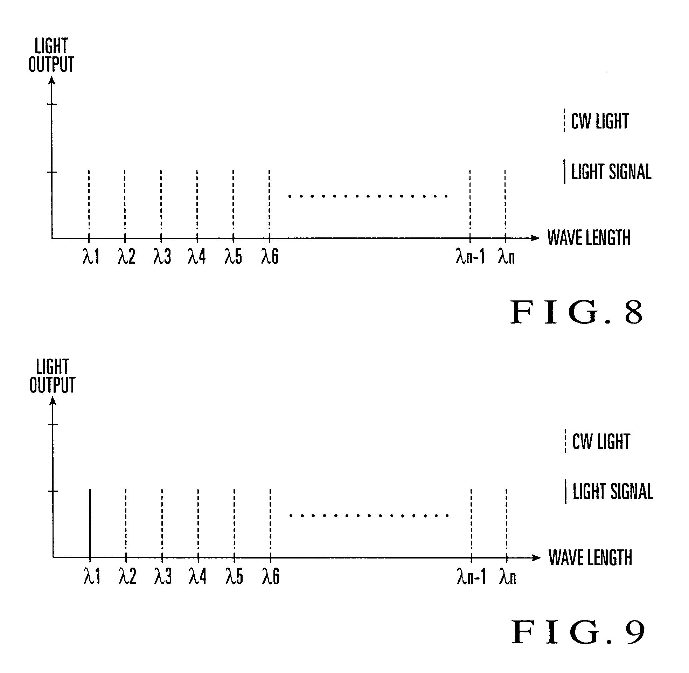

The λn CW light generating sections 11-1 to 11-n output CW light beams having the same wavelengths as operating wavelengths. The λn switching circuit sections 12-1 to 12-n receive the CW light beams output from the λn CW light generating sections 11-1 to 11-n and the operating wavelengths output from λn input terminals 15-1 to 15-n, and output the CW light beams, input from the λn CW light generating sections 11-1 to 11-n, to a wavelength multiplexing section 13 without any change when operating wavelengths λn are not input. Fig. 8 shows this state.

When the wavelength λn is used as an operating wavelength, the λn switching circuit section 12-n outputs the light signal input from the λn input terminal 15-n to the wavelength multiplexing section 14 without any change. Fig. 9 shows this state. The wavelength multiplexing section 14 wavelength-multiplexes the n different light signals from the λn switching circuit sections 12-1 to 12-n and outputs the resultant signal to an output terminal 16.

According to the above conventional method of adding operating wavelengths, however, n λn CW light generating sections 11-1 to 11-n and n λn switching circuit sections 12-1 to 12-n must be prepared. This leads to an increase in apparatus size. In addition, an increase in apparatus size will increase the cost and power consumption.

It is an object of the present invention to provide a wavelength division multiplex transmission system which can add operating wavelengths without changing the total output level at the output terminal of an apparatus in use and the output level per operating wavelength.

In order to achieve the above object, according to the present invention, there is provided a wavelength division multiplex transmission system comprising N/2 (N is the maximum number of wavelengths to be used) continuous wave light generating means, each for generating continuous wave light having the same wavelength as one of input even- and odd-numbered wavelengths used as operating wavelengths and outputting continuous wave light having a level twice as high as an input level of a light signal having an operating wavelength, N/2 switching means, each for selecting one of an input wavelength and continuous wave light output from the continuous wave light generating means, and wavelength multiplexing means for outputting the other light signal of input light signals having even- and odd-numbered wavelengths and a light signal having different wavelength which is output from the switching means upon wavelength multiplexing.
Fig. 1 is a block diagram showing a wavelength division multiplex transmission system according to an embodiment of the present invention;
Fig. 2 is a block diagram showing a λn switching circuit section in Fig. 1;
Fig. 3 is a flow chart showing the control operation of a control section in Fig. 1;
Fig. 4 is a graph showing a wavelength adding procedure in the absence of an operating wavelength in the system shown in Fig. 1;
Fig. 5 is a graph showing a wavelength adding procedure in the presence of one operating wavelength in the system shown in Fig. 1;
Fig. 6 is a graph showing a wavelength adding procedure in the presence of two operating wavelengths in the system shown in Fig. 1;
Fig. 7 is a block diagram showing a conventional wavelength division multiplex transmission system;
Fig. 8 is a graph showing a wavelength adding procedure in the absence of an operating wavelength in the conventional system in Fig. 7; and
Fig. 9 is a graph showing a wavelength adding procedure in the presence of one operating wavelength in the conventional system in Fig. 7.

The present invention will be described in detail below with reference to the accompanying drawings.

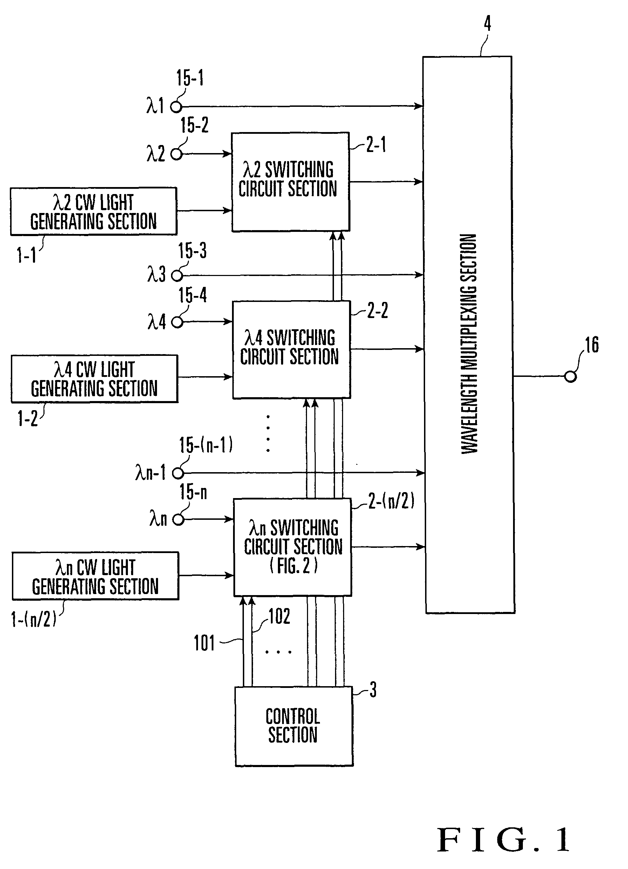

Fig. 1 shows a wavelength division multiplex transmission system according to an embodiment of the present invention. Referring to Fig. 1, the wavelength division multiplex transmission system according to this embodiment is comprised of n/2 λi CW light generating sections 1-j (i = 2, 4,..., n, j = 1 to n/2), n/2 λi switching circuit sections 2-j, a control section 3, and a wavelength multiplexing section 4. When, therefore, i = n, the λi CW light generating section 1-i is represented by a λn CW light generating section 1-(1/n), and the λi switching circuit section 2-j is represented by a λn switching circuit section 2-(1/n) where n is the maximum number of wavelengths used in the wavelength division multiplex transmission system. Note that if n is an odd number, the even integer obtained by increasing (incrementing) the odd number by one is set as n.

Each λi CW light generating section 1-j generates CW light having the same wavelength as an operating wavelength, and also outputs CW light of a level twice as high as the input level of a light signal having an operating wavelength which is input from the corresponding λi input terminal. Each λi switching circuit section 2-j receives the CW light output from the λi CW light generating section 1-j and the operating wavelength input to the λi input terminal, and outputs one of the signals to the wavelength multiplexing section 4. When a wavelength λk and an neighboring wavelength λk-1 are not used as operating wavelengths, the λi switching circuit section 2-j outputs the CW light output from the corresponding λi CW light generating section 1-j to the wavelength multiplexing section 4 without any change in accordance with a switching control signal from the control section 3. In this case, k represents the specific ordinal wavelength number in a wavelength region of the 1st to nth wavelengths.

When the neighboring wavelength λk-1 is used as an operating wavelength and the wavelength λk is not used as an operating wavelength, the λi switching circuit section 2-j selects the CW light output from the λi CW light generating section 1-j in accordance with a switching control signal from the control section 3. The λi switching circuit section 2-j also adjusts the optical level of the selected CW light to 1/2 in accordance with a CW light output level adjustment control signal 102, and outputs the resultant light to the wavelength multiplexing section 4. When the neighboring wavelength λk-1 is used as an operating wavelength and the wavelength λk is also used as an operating wavelength, the λi switching circuit section 2-j outputs the wavelength λk input from the λk input terminal to the wavelength multiplexing section 4 without any change in accordance with a switching control signal from the control section 3.

The control section 3 outputs a switching control signal and CW light output level adjustment control signal to the λi switching circuit section 2-j depending on the operation state of a wavelength. If the wavelength λk and neighboring wavelength λk-1 are not used as operating wavelengths, the control section 3 outputs a switching control signal 101 to the λi switching circuit section 2-j to output the CW light input from the λi CW light generating sections 1-j to the wavelength multiplexing section 4. At the same time, the control section 3 outputs the CW light output level adjustment control signal 102 to maintain the optical level of the CW light input from the λi CW light generating section 1-j.

When the neighboring wavelength λk-1 is used as an operating wavelength and the wavelength λk is not used as an operating wavelength, the control section 3 outputs the switching control signal 101 to the λi switching circuit sections 2-j to output the CW light input from the λi CW light generating section 1-j to the wavelength multiplexing section 4. At the same time, the control section 3 outputs the CW light output level adjustment control signal 102 to adjust the optical level of the CW light input from the λi CW light generating section 1-j to 1/2.

When the neighboring wavelength λk-1 is used as an operating wavelength and the wavelength λk is also used as an operating wavelength, the control section 3 outputs the switching control signal 101 to the λi switching circuit section 2-j to output the operating wavelength λk input to the λk input terminal to the wavelength multiplexing section 4. At the same time, the control section 3 outputs the CW light output level adjustment control signal 102 to adjust the optical level of the CW light output from the λi CW light generating section 1-j to 1/2.

The wavelength multiplexing section 4 outputs light signals which have wavelengths λ1, λ3,..., λn-1 and are input to input terminals 15-1, 15-3,..., 15-(n-1) and light signals which have different wavelengths and are output from the λi switching circuit sections 2-j to the output terminal upon wavelength multiplexing.

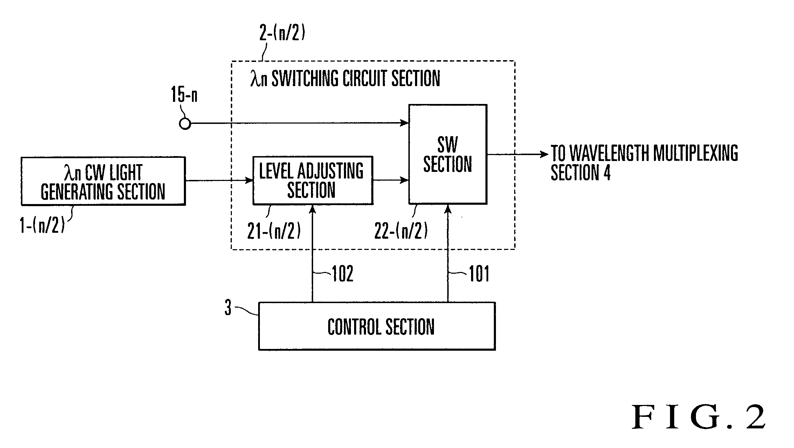

Fig. 2 shows the arrangement of the λn switching circuit section 2-(n/2). Referring to Fig. 2, the λn switching circuit section 2-(n/2) is comprised of a level adjusting section 21-(n/2) and a switch section 22-(n/2). Note that each of the switching circuit sections 2-{(n/2)-1} for the λ2 switching circuit sections 2-1 to λ(n-2) has the same arrangement as that of the λn switching circuit section 2-(n/2) shown in Fig. 2.

In the λn switching circuit section 2-(n/2) having this arrangement, the level adjusting section 21-(n/2) adjusts the level of CW light from the λn CW light generating section 1-(n/2) in accordance with the CW light output level adjustment control signal 102 from the control section 3, and outputs the resultant light to the switch section 22-(n/2). The switch section 22-(n/2) selects one of the operating wavelength input to the λn input terminal and the CW light whose level was adjusted by the level adjusting section 21-(n/2) in accordance with the switching control signal 101 from the control section 3, and outputs the selected one to the wavelength multiplexing section 4.

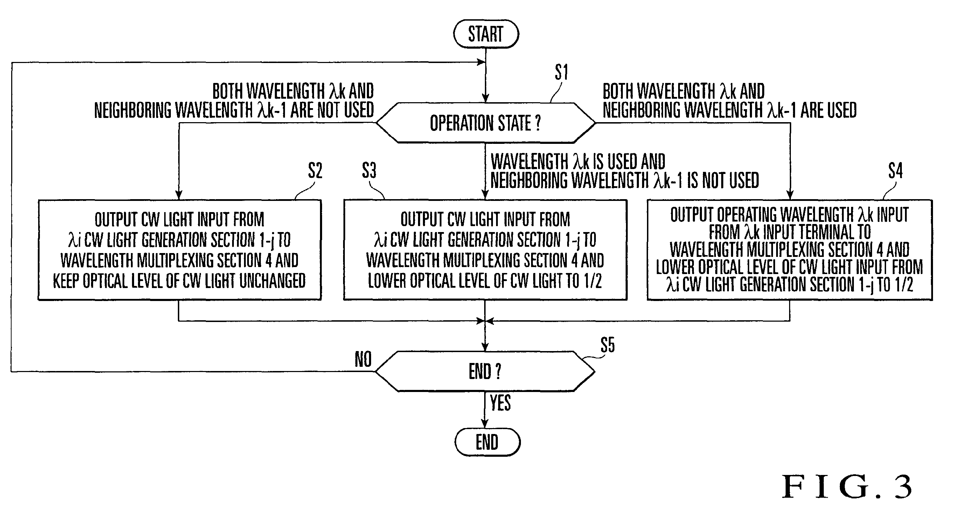

The control operation of the control section 3 will be described next with reference to Fig. 3. An addition method of keeping the total output level at the output terminal of the apparatus constant and also keeping the output level per operation wavelength constant will be described below by exemplifying the case where wavelengths λ1 and λ2 are added in the absence of an operating wavelength.

First of all, the control section 3 checks the operation states of all wavelengths λ1 to λn (step S1). If it is determined in step S1 that none of the wavelengths λ1 to λn are used as operating wavelengths, the control section 3 outputs the logic-"1" switching control signal 101 to all the λi switching circuit sections 2-j to output CW light beams from the λi CW light generating sections 1-j to the wavelength multiplexing section 4. At the same time, the control section 3 outputs the logic-"0" CW light output level adjustment control signal 102 to all the λi switching circuit sections 2-j to keep the optical levels of the CW light beams output from the λi CW light generating sections 1-j unchanged (step S2).

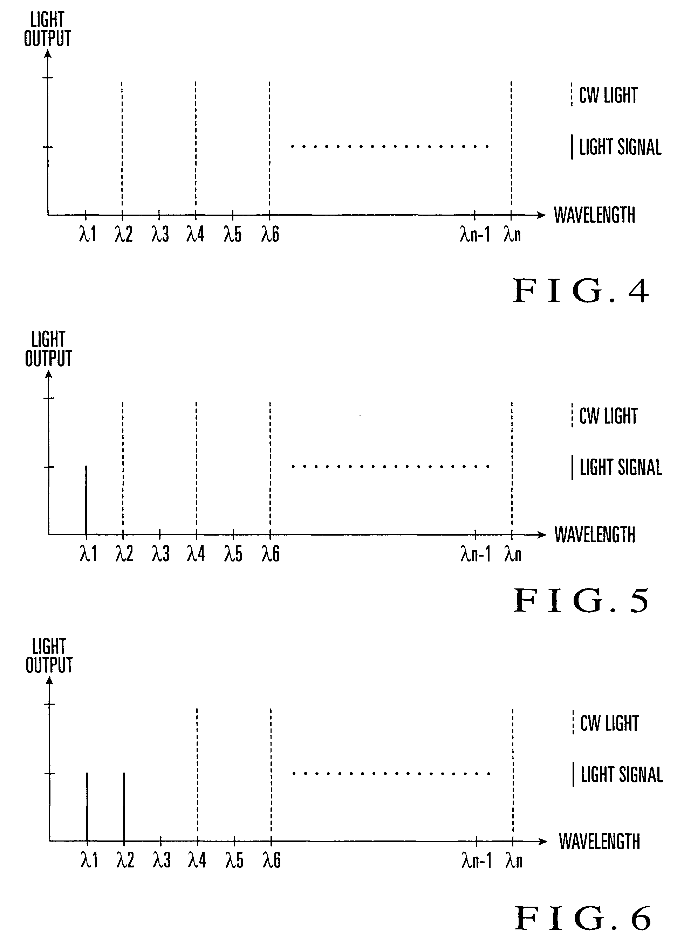

In response to this signal, all the λi switching circuit sections 2-j output the CW light beams output from the λi CW light generating sections 1-j to the wavelength multiplexing section 4. Fig. 4 shows this state.

If it is determined in step S1 that the wavelength λ1 is used as an operating wavelength and the wavelength λ2 is not used as an operating wavelength, the control section 3 outputs the logic-"1" switching control signal 101 to the λ2 switching circuit section 2-1 to output the CW light beam from the λ2 CW light generating section 1-1 to the wavelength multiplexing section 4. At the same time, the control section 3 outputs the logic-"1" CW light output level adjustment control signal 102 to the λ2 switching circuit section 2-1 to lower the optical level of the CW light beam output from the λ2 CW light generating section 1-1 to 1/2 (step S3).

The control section 3 outputs the same logic-"1" switching control signal 101 and logic-"1" CW light output level adjustment control signal 102 as those described above to other wavelength switching circuit sections 2-2,..., 2-(n/2). With this operation, the optical level of the CW light beam output from the λ2 CW light generating section 1-1 is adjusted to 1/2 by the λ2 switching circuit section 2-1. The resultant light beam is output to the wavelength multiplexing section 4. Fig. 5 shows this state.

If it is determined in step S1 that both the wavelengths λ1 and λ2 are used as operating wavelengths, the control section 3 outputs the logic-"0" switching control signal 101 to the λ2 switching circuit section 2-1 to output the operating wavelength λ2 input to the λ2 input terminal 15-2 to the wavelength multiplexing section 4. At the same time, the control section 3 outputs the logic-"1" CW light output level adjustment control signal 102 to the λ2 switching circuit section 2-1 to lower the optical level of the CW light beam output from the λ2 CW light generating section 1-1 to 1/2 (step S4).

The control section 3 outputs the same logic-"0" switching control signal 101 and logic-"1" CW light output level adjustment control signal 102 as those described above to the other wavelength switching circuit sections 2-2,..., 2-(n/2). With this operation, the operating wavelength input to the λ2 input terminal is output from the λ2 switching circuit section 2-1 to the wavelength multiplexing section 4 without any change. Fig. 6 shows this state.

As described above, when wavelengths are to be added, the wavelength λn-1 is used first, and then the wavelength λn is used.

By preparing the λi CW light generating sections 1-j and λi switching circuit sections 2-j for only even-numbered (or odd-numbered) wavelengths in this manner, wavelengths can be added at low cost without affecting transmission path characteristics. In addition, the mount space of a transmission apparatus can be reduced, and hence the power consumption can be reduced.

In the above embodiment, the maximum number N of wavelengths is an even number. If, however, the maximum number N of wavelengths is an odd number, CW light generating sections half the even number obtained by increasing (incrementing) the odd number by one may be prepared to make the number of wavelengths even. In this case, the switching circuit and control section perform the following operation for the wavelength λn (odd-numbered) and wavelength λn+1 (even-numbered wavelength upon increment).

If the wavelength λn (odd-numbered wavelength) and wavelength λn+1 (even-numbered wavelength upon increment) are not used as operating wavelengths, the switching circuit outputs the CW light output from the λn+1 CW light generating section to the wavelength multiplexing section without any change in accordance with a switching control signal from the control section.

If the wavelength λn (odd-numbered wavelength) is used as an operating wavelength and the wavelength λn+1 (even-numbered wavelength upon increment) is not used as an operating wavelength, the switching circuit selects the CW light input from the λ n+1 CW light generating section in accordance with a switching control signal from the control section and also adjusts the optical level of the CW light to 1/2 in accordance with a CW light output level adjustment control signal from the control section. The switching circuit then outputs the resultant CW light to the wavelength multiplexing section.

If the wavelength λn (odd-numbered wavelength) and wavelength λn+1 (even-numbered wavelength upon increment) are not used as operating wavelengths, the control section outputs a switching control signal to the λn+1 switching circuit section to output the CW light input from the λn+1 CW light generating section to the wavelength multiplexing section, and also outputs a CW light output level adjustment control signal to keep the optical level of the CW light input from the λn+1 CW light generating section unchanged.

If the wavelength λn (odd-numbered wavelength) is used as an operating wavelength and the wavelength λn+1 (even-numbered wavelength upon increment) is not used as an operating wavelength, the control section outputs a switching control signal to the λn+1 switching circuit section to output the CW light input from the λn+1 CW light generating section to the wavelength multiplexing section, and also outputs a CW light output level adjustment control signal to adjust the optical level of the CW light input from the λn+1 CW light generating section to 1/2.

As described above, according to the present invention, operating wavelengths can be added without changing the total output level at the output terminal of an apparatus in use and the output level per operating wavelength. According to the wavelength adding method for the wavelength division multiplex transmission system according to the present invention, in the wavelength division multiplex transmission system for transmitting N light signals having different wavelengths by wavelength division multiplexing, CW light generating sections and switching circuit sections are prepared for only even-numbered (odd-numbered) wavelengths.

With this arrangement, wavelengths can be added at low cost without affecting transmission path characteristics. In addition, the mount space of a transmission apparatus can be reduced, and the power consumption can be reduced. Furthermore, operating wavelengths can be added without changing the total output level at the output terminal of an apparatus in use and the output level per operating wavelength.

## Claims

1. A wavelength division multiplex transmission system **characterized by** comprising:
N/2 (N is the maximum number of wavelengths to be used) continuous wave light generating means (1-1 - 1-n/2), each for generating continuous wave light having the same wavelength as one of input even- and odd-numbered wavelengths used as operating wavelengths and outputting continuous wave light having a level twice as high as an input level of a light signal having an operating wavelength;
N/2 switching means (2-1 - 2-n/2), each for selecting one of an input wavelength and continuous wave light output from said continuous wave light generating means; and
wavelength multiplexing means (4) for outputting the other light signal of input light signals having even- and odd-numbered wavelengths and a light signal having different wavelength which is output from said switching means upon wavelength multiplexing.

2. A system according to claim 1, further comprising control means (3) for controlling switching operation of said switching means and level adjusting operation for continuous wave light output from said continuous wave light generating means by outputting a switching control signal and continuous wave light output level adjustment control signal to said switching means in accordance with an operation state of wavelengths.

3. A system according to claim 2, wherein when a wavelength λn (n is a value representing the specific ordinal wavelength number in a wavelength region of the 1st to Nth wavelengths) and neighboring wavelength λn-1 are not used as operating wavelengths, said control means controls said switching means corresponding to the wavelength λn to output continuous wave light output from said continuous wave light generating means for generating the wavelength λn to said wavelength multiplexing means and maintain an optical level of the continuous wave light.

4. A system according to claim 3, wherein when the neighboring wavelength λn-1 is used as an operating wavelength and the wavelength λn is not used as an operating wavelength, said control means controls said switching means corresponding to the wavelength λn to output continuous wave light output from said continuous wave light generating means for generating the wavelength λn to said wavelength multiplexing means and lower an optical level of the continuous wave light output from said continuous wave generating means for generating the wavelength λn to 1/2.

5. A system according to claim 3, wherein when the neighboring wavelength λn-1 and wavelength λn are used as operating wavelengths, said control means controls said switching means corresponding to the wavelength λn to output the input operating wavelength λn to said wavelength multiplexing section and lower an optical level of continuous wave light output from said continuous wave light generating means for generating the wavelength λn to 1/2.

6. A system according to any of claims 1 to 5, wherein when N is an odd number, said continuous wave light generating means corresponding to an even integer equal to (N + 1)/2, and the number of wavelengths is set to an even number.

7. A system according to claim 6, wherein when an odd-numbered wavelength λn (n is a value representing the specific ordinal wavelength number in a wavelength region of the 1st to Nth wavelengths) and an even-numbered wavelength λn+1 which is adjacent to the wavelength λn with an ordinal number being incremented by one are not used as operating wavelengths, said control means controls said switching means corresponding to the even-numbered wavelength λn+1 to output continuous wave light output from said continuous wave light generating means corresponding to the even-numbered wavelength λn+1 to said wavelength multiplexing means and maintain an optical level of the continuous wave light output from said continuous wave light generating means corresponding to the even-numbered wavelength λn+1.

8. A system according to claim 7, wherein when the odd-numbered wavelength λn is used as an operating wavelength and the even-numbered wavelength λn+1 which is not used as an operating wavelength, said control means controls said switching means corresponding to the even-numbered wavelength λn+1 to output the continuous wave light output from said continuous wave light generating means corresponding to the even-numbered wavelength λn+1 to said wavelength multiplexing means and lower the optical level of the continuous wave light output from said continuous wave light generating means corresponding to the even-numbered wavelength λn+1 to 1/2.
